# EUROPEAN PATENT APPLICATION

(11) **EP 4 510 332 A1**
(43) Date of publication of application: **19.02.2025**
(21) Application number: 23838394.7
(22) Date of filing: 01.02.2023
(51) Int. Cl.: H01M 50/209

(54) **BATTERY CELL, BATTERY AND ELECTRICAL DEVICE**

(30) Priority: 15.07.2022 CN 202221839791 U
(71) Applicant: Contemporary Amperex Technology Co., Limited, Ningde City, Fujian 352100 (CN)
(72) Inventor: QIAN, Ou, Ningde City, Fujian 352100 (CN); LI, Yao, Ningde City, Fujian 352100 (CN); CHEN, Xiaobo, Ningde City, Fujian 352100 (CN); CAI, Jiajin, Ningde City, Fujian 352100 (CN)
(74) Representative: Kraus & Lederer PartGmbB
(86) International application number: PCT/CN2023/074107
(87) International publication number: WO 2024/011892

(57) **Abstract**

This application relates to the battery field, and in particular, to a battery cell, a battery, and an electrical device. The battery cell of this application includes a housing, a cell assembly, and an insulation layer. A mounting capacity is created inside the housing. The cell assembly is disposed in the mounting cavity. The insulation layer is disposed between at least a part of the cell assembly and the housing. In the technical solution of this application, the insulation layer is disposed between at least a part of the cell assembly and the housing. When the housing incurs an insulation failure and generates an electrical arcing or arc, the electrical arcing or arc generated by the housing will not break down the insulation layer due to insulativity of the insulation layer, thereby protecting at least a part, disposed opposite to the insulation layer, of the cell assembly. This reduces or avoids damage to the cell assembly, prevents short-circuiting inside the cell assembly, and in turn, avoids safety accidents and improves the safety and reliability of the battery cell in use.

## Description

### CROSS-REFERENCE TO RELATED APPLICATIONS

This application claims priority to Chinese Patent Application No. 202221839791.3, filed on July 15, 2022 and entitled "BATTERY CELL, BATTERY, AND ELECTRICAL DEVICE", which is incorporated herein by reference in its entirety.

### TECHNICAL FIELD

This application relates to the technical field of batteries, and in particular, to a battery cell, a battery, and an electrical device.

### BACKGROUND

With the environmental issues becoming increasingly prominent, people begin to actively advocate a low-carbon economy. New energy vehicles are emerging with the increasingly serious air quality. Numerous manufacturers and consumers have also gradually recognized new energy vehicles represented by hybrid electric vehicles and battery electric vehicles. As a main power source for the new energy vehicles, power batteries have become one of the core components of an electric vehicle.

When the insulation of a battery system fails, a cell assembly inside the battery is prone to a short circuit, thereby causing thermal runaway of the battery or even causing fire accidents.

### SUMMARY

In view of the disadvantages of the prior art, this application discloses a battery cell, a battery, and an electrical device to effectively solve the problem that a cell assembly is prone to short-circuiting.

According to a first aspect, this application provides a battery cell. The battery cell includes:
a housing, where a mounting cavity is provided inside the housing;
a cell assembly, where the cell assembly is disposed in the mounting cavity; and
an insulation layer, disposed between at least a part of the cell assembly and the housing.

In the technical solution of this application, the insulation layer is disposed between at least a part of the cell assembly and the housing. When the housing incurs an insulation failure and generates an electrical arcing or arc, the electrical arcing or arc generated by the housing will not break down the insulation layer due to insulativity of the insulation layer, thereby protecting at least a part, disposed opposite to the insulation layer, of the cell assembly. This reduces or avoids damage to the cell assembly, prevents short-circuiting inside the cell assembly, and in turn, avoids safety accidents and improves the safety and reliability of the battery cell in use.

In an embodiment of this application, the battery cell further includes an end cap. An opening communicating to the mounting cavity is created on the housing. The end cap fits and covers the opening. The insulation layer is disposed between at least a part of the cell assembly and the end cap. With the insulation layer disposed between the cell assembly and the end cap, when the end cap incurs an insulation failure and generates an electrical arcing or arc, the electrical arcing or arc will not break down the part, corresponding to the insulation layer, of the cell assembly, thereby reducing or avoiding short-circuiting in the cell assembly.

In an embodiment of this application, the battery cell further includes an electrode post. The electrode post penetrates the end cap. The electrode post is connected to the cell assembly by a conductive strip. The insulation layer is disposed between at least a part of the cell assembly and the conductive strip. With the insulation layer disposed between the cell assembly and the conductive strip, when the electrode post or conductive strip incurs an insulation failure and generates an electrical arcing or arc, the electrical arcing or arc will not break down the part, corresponding to the insulation layer, of the cell assembly, thereby reducing or avoiding short-circuiting in the cell assembly.

In an embodiment of this application, the insulation layer laps an end of a tab along a direction perpendicular to the tab of the cell assembly. When the pressure in the cell assembly rises, because the insulation layer laps the end of the tab, the cell assembly is facilitated to exhaust gas, thereby preventing an explosion caused by the failure to exhaust the high-pressure gas in time.

In an embodiment of this application, a bend portion is disposed on the conductive strip. An insertion hole is created on the insulation layer. The bend portion passes through the insertion hole and is connected to the tab. With the insertion hole created, it is convenient for the bend portion to penetrate the insulation layer and then is connected to the tab, so as to provide electrical energy to the outside through the electrode post.

In an embodiment of this application, a through-hole is created on the insulation layer. The through-hole communicates to a pressure relief piece on the end cap. When the internal pressure of the battery cell rises, the generated high-pressure gas can act on the pressure relief piece through the through-hole, thereby bursting the pressure relief piece, expelling the high-pressure gas out of the battery cell, and ensuring the safety and reliability of the battery cell in use.

In an embodiment of this application, the insulation layer is connected to the cell assembly. With the insulation layer connected to the cell assembly, the insulation layer can protect the cell assembly from being broken down by the electrical arcing or arc, thereby improving the safety and reliability of the battery cell in use.

In an embodiment of this application, the insulation layer is connected to the housing. With the insulation layer connected to the housing, the insulation layer can protect the cell assembly from being broken down by the electrical arcing or arc, thereby improving the safety and reliability of the battery cell in use.

In an embodiment of this application, the insulation layer is fixed between the housing and the cell assembly. With the insulation layer fixed between the housing and the cell assembly, the insulation layer can protect the cell assembly from being broken down by the electrical arcing or arc, thereby improving the safety and reliability of the battery cell in use.

In an embodiment of this application, the insulation layer is connected to the conductive strip. With the insulation layer connected to the conductive strip, the insulation layer can protect the cell assembly from being broken down by the electrical arcing or arc, thereby improving the safety and reliability of the battery cell in use.

In an embodiment of this application, the insulation layer is fixed between the conductive strip and the cell assembly. With the insulation layer fixed between the conductive strip and the cell assembly, the insulation layer can protect the cell assembly from being broken down by the electrical arcing or arc, thereby improving the safety and reliability of the battery cell in use.

In an embodiment of this application, a melting point of the insulation layer is greater than 250 °C and less than 1000 °C. By setting the melting point of the insulation layer to be greater than 250 °C and less than 1000 °C, this application can prevent the insulation layer from melting under the action of the electrical arcing or arc, thereby effectively protecting the cell assembly.

In an embodiment of this application, the insulation layer includes at least one of a polyimide layer, a phenolic plastic layer, a ceramic layer, or a polytetrafluoroethylene layer. All of the above material layers are insulative and somewhat heat-resistant, thereby meeting the requirements of insulativity and heat resistance of the insulation layer.

In an embodiment of this application, a thickness of the insulation layer is D, satisfying: 0.05 mm < D < 2 mm. A voltage of the battery cell is V, satisfying: 200 V/mm < V/D < 40000 V/mm. The thickness range of the insulation layer can effectively prevent the insulation layer from being broken down by the electrical arcing or arc generated at a corresponding voltage, thereby protecting the cell assembly.

In an embodiment of this application, a total mass of the insulation layers is 0.1% to 1% of a total mass of the battery cell. The dimension and area corresponding to the mass of the insulation layer can prevent the electrical arcing or arc from breaking down the insulation layer and the cell assembly, and the insulation layer is prevented from occupying an excessive space in the housing, thereby meeting the requirements of miniaturization and light weight of the battery cell.

In an embodiment of this application, the cell assembly is a cuboidal structure. The insulation layer is disposed between at least one of two lateral faces of the cell assembly in a length direction of the cell assembly and the housing. By means of the above arrangement, at least one lateral face in the length direction of the cell assembly is prevented from being broken down by the electrical arcing or arc.

In an embodiment of this application, the cell assembly is a cuboidal structure. The insulation layer is disposed between at least one of two lateral faces of the cell assembly in a width direction of the cell assembly and the housing. By means of the above arrangement, at least one lateral face in the width direction of the cell assembly is prevented from being broken down by the electrical arcing or arc.

In an embodiment of this application, the cell assembly is a cuboidal structure. The insulation layer is disposed between a bottom face of the cell assembly and the housing. By means of the above arrangement, the bottom face of the cell assembly is prevented from being broken down by the electrical arcing or arc.

In an embodiment of this application, the cell assembly is a cuboidal structure. The insulation layer is disposed on a top face of the cell assembly. By means of the above arrangement, the top face of the cell assembly is prevented from being broken down by the electrical arcing or arc.

In an embodiment of this application, the insulation layer fully covers a corresponding surface of the cell assembly. With the insulation layer fully covering the corresponding surface, the corresponding surface is fully and effectively prevented from being broken down by the electrical arcing or arc.

According to a second aspect, this application provides a battery. The battery contains the battery cell disclosed in the above embodiment.

According to a third aspect, this application provides an electrical device. The electrical device contains the battery disclosed in the above embodiment.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a vehicle according to an embodiment of this application;
FIG. 2 is a schematic structural diagram of a battery pack according to an embodiment of this application;
FIG. 3 is a schematic structural diagram of a battery module according to an embodiment of this application;
FIG. 4 is a schematic exploded view of a battery cell according to an embodiment of this application;
FIG. 5 is a schematic structural diagram of connection between a cell assembly and a first insulation layer according to an embodiment of this application;
FIG. 6 is a schematic structural diagram of connection between a cell assembly and a first insulation layer from another viewing angle according to an embodiment of this application;
FIG. 7 is a schematic structural diagram of a first insulation layer according to an embodiment of this application;
FIG. 8 is a schematic structural diagram of connection between a cell assembly and a second insulation layer according to an embodiment of this application;
FIG. 9 is a schematic structural diagram of connection between a cell assembly and a second insulation layer from another viewing angle according to an embodiment of this application;
FIG. 10 is a schematic structural diagram of a second insulation layer according to an embodiment of this application;
FIG. 11 is a schematic structural diagram of connection between a cell assembly and a third insulation layer according to an embodiment of this application;
FIG. 12 is a schematic structural diagram of connection between a cell assembly and a third insulation layer from another viewing angle according to an embodiment of this application;
FIG. 13 is a schematic structural diagram of a third insulation layer according to an embodiment of this application;
FIG. 14 is a schematic structural diagram of connection between a cell assembly and a fourth insulation layer according to an embodiment of this application; and
FIG. 15 is a schematic structural diagram of connection between a cell assembly and a fourth insulation layer from another viewing angle according to an embodiment of this application.

### List of reference numerals:

1: vehicle;
10: battery; 11: controller; 12: motor;
20: battery module; 21: battery cell; 211: housing; 212: end cap; 213: cell assembly; 2131: tab; 214: first insulation layer; 2141: first body portion; 2142: first lateral portion; 2143: second lateral portion; 215: electrode post; 216: conductive strip; 217: second insulation layer; 2171: second body portion; 2172: insertion hole; 2173: through-hole; 218: third insulation layer; 2181: third body portion; 2182: first protruding portion; 2183: second protruding portion; 219: fourth insulation layer;
30: box; 301: first part; 302: second part.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

It is hereby noted that, unless otherwise specified, the technical terms or scientific terms used in embodiments of this application bear the meanings commonly understood by a person skilled in the technical field of embodiments of this application.

In the description of embodiments of this application, a directional or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a directional or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In addition, the technical terms such as "first" and "second" are used merely for ease of description, but not to indicate or imply relative importance or implicitly specify the number of technical features mentioned. In the description of some embodiments of this application, unless otherwise expressly specified, "a plurality of" means two or more.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

In the description of embodiments of this application, unless otherwise expressly specified and defined, a first feature being "on" or "under" a second feature may mean that the first feature is in direct contact with the second feature, or the first feature is in indirect contact with the second feature through an intermediary. In addition, a first feature being "on", "above", or "over" a second feature may be that the first feature is exactly above or obliquely above the second feature, or simply that the first feature is at an altitude higher than the second feature. A first feature being "under", "below", or "beneath" a second feature may be that the first feature is exactly under or obliquely under the second feature, or simply that the first feature is at an altitude lower than the second feature.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the expansion of the application fields of the power batteries.

Because the housing and electrode post of a battery cell are typically made of metal, when a battery system incurs a double-point insulation failure, electrical arcing occurs on an energized metal part such as a positive or negative electrode post and the (aluminum or steel) housing in the battery cell. The electrical arcing may break down the electrode post and the metal housing, damage the cell assembly inside the battery, and result in an internal short circuit of the cell assembly, thereby causing thermal runaway of the battery or even causing fire accidents.

In order to solve the problem that the electrical arcing damages the cell assembly after breaking down the electrode post or metal shell, an insulation layer may be disposed on the outer side of the cell assembly. When the battery cell incurs an insulation failure and causes the energized metal part to generate an electrical arcing, the electrical arcing generated by the energized metal part will not break down the insulation layer due to the insulativity of the insulation layer, thereby protecting at least a part, disposed opposite to the insulation layer, of the cell assembly. This reduces or avoids damage to the cell assembly, prevents short-circuiting inside the cell assembly, and in turn, avoids safety accidents and improves the safety and reliability of the battery cell in use.

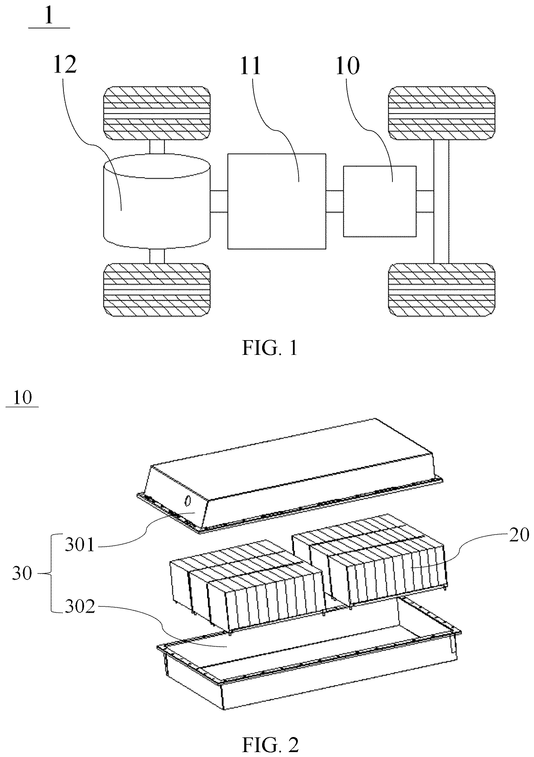

Referring to FIG. 1, FIG. 1 is a schematic structural diagram of a vehicle 1 according to an embodiment of this application. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A battery 10 is disposed inside the vehicle 1. The battery 10 may be disposed at the bottom, front, or rear of the vehicle 1. The battery 10 may be configured to supply power to the vehicle 1. For example, the battery 10 may serve as an operating power supply of the vehicle 1. The vehicle 1 may further include a controller 11 and a motor 12. The controller 11 is configured to control the battery 10 to supply power to the motor 12, for example, to meet electrical energy requirements in starting, navigating, or running the vehicle 1.

In an embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power use requirements, the battery 10 may include a plurality of battery cells 21. A battery cell 21 is a minimum unit that makes up a battery module 20 or battery pack. A plurality of battery cells 21 may be connected together in series and/or parallel by electrode posts, so as to be applied in various scenarios. A battery referred to herein includes a battery module 20 or a battery pack. The plurality of battery cells 21 may be connected in series, parallel, or series-and-parallel pattern. The series-and-parallel pattern means a combination of series connection and parallel connection. The battery 10 is also referred to as a battery pack. In some embodiments of this application, the plurality of battery cells 21 may directly make up a battery pack, or form a battery module 20 before a plurality of battery modules 20 make up a battery pack.

FIG. 2 is a schematic structural diagram of a battery 10 according to an embodiment of this application. In FIG. 2, the battery 10 may include a plurality of battery modules 20 and a box 30. The plurality of battery modules 20 are accommodated in the box 30. The box 30 is configured to accommodate the battery cells 21 or the battery modules 20 to prevent liquid or other foreign matters from affecting the charge or discharge of the battery cells 21. The box 30 may be a simple three-dimensional structure such as a stand-alone cuboid or cylinder or sphere, or may be a complex three-dimensional structure compounded of simple three-dimensional structures such as cuboids, cylinders or spheres, without being limited herein. The material of the box 30 may be an alloy material such as aluminum alloy or iron alloy, or a polymer material such as polycarbonate or polyisocyanurate foam plastic, or a composite material compounded of glass fiber and epoxy resin, without being limited herein.

In an embodiment of this application, the box 30 may include a first part 301 and a second part 302. The first part 301 and the second part 302 fit each other. The first part 301 and the second part 302 together define a space configured to accommodate the battery cell 21. The second part 302 may be a hollow structure opened at one end. The first part 301 may be a plate-like structure. The first part 301 fits on an opening side of the second part 302 so that the first part 301 and the second part 302 together define a space for accommodating the battery cell 21. Alternatively, both the first part 301 and the second part 302 may be hollow structures opened at one side. The opening side of the first part 301 fits with the opening side of the second part 302.

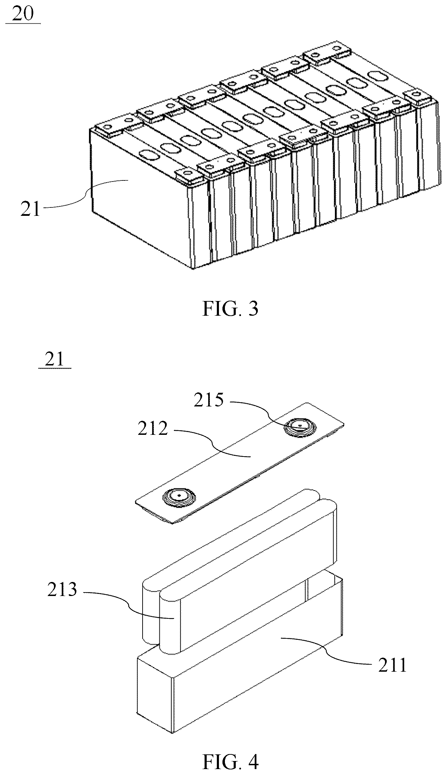

FIG. 3 is a schematic structural diagram of a battery module 20 according to an embodiment of this application. In FIG. 3, the battery module 20 may include a plurality of battery cells 21. The plurality of battery cells 21 may be connected in series, parallel, or series-and-parallel pattern to form a battery module 20, and then a plurality of battery modules 20 may be connected in series, parallel, or series-and-parallel pattern to form the battery 10. In this application, the battery cell 21 may be a lithium-ion battery, a sodium-ion battery, a magnesium-ion battery, or the like. The type of the battery cell is not limited herein. The battery cell 21 may be in a cylindrical shape, a flat shape, a cuboidal shape, or other shapes, without being limited herein. Depending on the form of packaging, the battery cell 21 is typically classed into three types: cylindrical cell, prismatic cell, and pouch cell. The type of the battery cell is not limited herein. For brevity, the following embodiments are described by using a prismatic cell as an example.

FIG. 4 is a schematic exploded view of a battery cell 21 according to an embodiment of this application. The battery cell 21 is a minimum unit of a battery 10. As shown in FIG. 4, the battery cell 21 includes a housing 211, an end cap 212, and a cell assembly 213.

The end cap 212 is a component that fits and covers the opening of the housing 211 to isolate the internal environment of the battery cell 21 from the external environment. Without limitation, the shape of the end cap 212 may be adapted to the shape of the housing 211 to fit the housing 211. Optionally, the end cap 212 may be made of a material of appropriate hardness and strength (such as aluminum alloy), so that the end cap 212 is not prone to deform when squeezed or impacted. In this way, the battery cell 21 achieves higher structural strength and higher safety performance. Functional components such as an electrode post 215 may be disposed on the end cap 212. The electrode post 215 may be configured to be electrically connected to the cell assembly 212 to output or input electrical energy of the battery cell 21. In an embodiment of this application, a pressure relief mechanism configured to release an internal pressure when the internal pressure or temperature of the battery cell 21 reaches a threshold may be further disposed on the end cap 212. In an embodiment of this application, an insulator may be further disposed on an inner side of the end cap 212. The insulator may be configured to isolate an electrically connected component in the housing 211 from the end cap 212 to reduce short-circuit risks. For example, the insulator may be plastic, rubber, or the like.

The housing 211 is a component configured to fit the end cap 212 to form an internal environment of the battery cell 21. The formed internal environment may be used to accommodate the cell assembly 212, an electrolyte solution (not shown in the drawing), and other components. The housing 211 and the end cap 212 may be stand-alone components. An opening may be created on the housing 211. At the opening, the end cap 212 fits and covers the opening to form the internal environment of the battery cell 21. Without limitation, the end cap 212 and the housing 211 may be integrated instead. Specifically, the end cap 212 and the housing 211 may form a common connection interface before other components are put into the housing. Subsequently, when the interior of the housing 211 needs to be sealed, the end cap 212 is made to fit with the housing 211. The housing 211 may be in various shapes and sizes, such as a cuboid, cylinder, or hexagonal prism. Specifically, the shape of the housing 211 may be determined depending on the specific shape and size of the cell assembly 213. The housing 211 may be made of a variety of materials such as copper, iron, aluminum, stainless steel, aluminum alloy, or plastic, without being particularly limited herein.

The cell assembly 213 is a component in which electrochemical reactions occur in a battery cell 21. The housing 211 may contain one or more cell assemblies 212. The cell assembly 213 is primarily formed by winding or stacking a positive electrode plate and a negative electrode plate. A separator is generally disposed between the positive electrode plate and the negative electrode plate. The parts, coated with an active material, of the positive electrode plate and the negative electrode plate, constitute a body portion of the cell assembly 213. The part, coated with no active material, of the positive electrode plate and the negative electrode plate respectively, constitutes a tab (not shown in the drawing). The positive tab and the negative tab may be located at one end of the body portion together or at two ends of the body portion respectively. In a charge-and-discharge process of the battery, the positive active material and the negative active material react with an electrolyte solution. The tabs are connected to electrode posts 215 to form a current circuit.

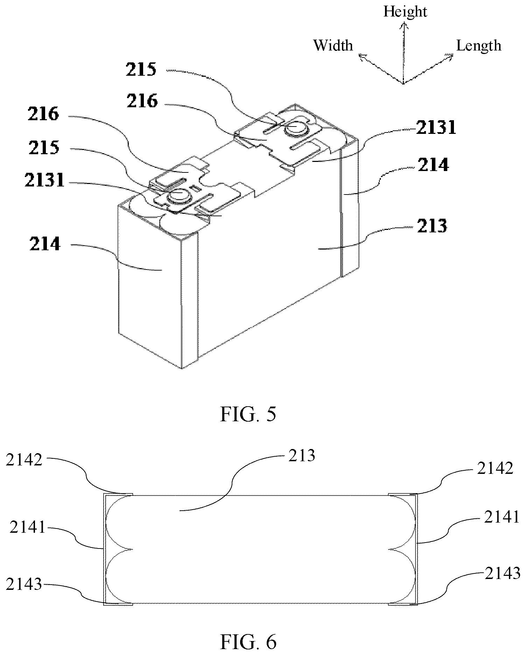

In an embodiment of this application, as shown in FIG. 4 to FIG. 6, FIG. 5 is a schematic structural diagram of connection between a cell assembly 213 and a first insulation layer 214 according to an embodiment of this application, and FIG. 6 is a schematic structural diagram of connection between a cell assembly 213 and a first insulation layer 214 from another viewing angle according to an embodiment of this application. This application provides a battery cell 21. The battery cell 21 includes a housing 211, a cell assembly 213, and an insulation layer. A mounting capacity is created inside the housing 211. The cell assembly 213 is disposed in the mounting cavity. The insulation layer is disposed between at least a part of the cell assembly 213 and the housing 211.

The insulation layer is typically made of an insulation material, and is configured to prevent electrical conduction between two adjacent conductors. As shown in FIG. 5, the cell assembly 213 is a cuboidal structure. A first insulation layer 214 is disposed at each of two ends of the cell assembly 213 in a length direction of the cell assembly. Specifically, as shown in FIG. 5 to FIG. 7, FIG. 7 is a schematic structural diagram of a first insulation layer 214 according to an embodiment of this application. The first insulation layer 214 includes a first body portion 2141, a first lateral portion 2142, and a second lateral portion 2143. The first lateral portion 2142 and the second lateral portion 2143 are disposed on the same side of the first body portion 2141, and are disposed opposite to each other. The first lateral portion 2142 and the second lateral portion 2143 are connected to the two lateral faces of the cell assembly 213 in the width direction of the cell assembly, respectively. The first body portion 2141 is disposed directly opposite to one lateral face of the cell assembly 213 in the length direction of the cell assembly. In this way, the lateral face of the cell assembly 213 in the length direction is protected by the first body portion 214.

When the battery cell 21 incurs an insulation failure that causes the housing 211 to generate an electrical arcing or arc, the electrical arcing or arc generated by the housing 211 will not break down the first insulation layers 214 on the two sides of the cell assembly 213 in the length direction due to insulativity of the first insulation layers 214, thereby protecting both lateral faces of the cell assembly 213 in the length direction. This reduces or avoids damage to the cell assembly 213, prevents short-circuiting inside the cell assembly 213, and in turn, avoids safety accidents and improves the safety and reliability of the battery cell 21 in use.

As shown in FIG. 4 and FIG. 5, in an embodiment of this application, the battery cell 21 further includes an end cap 212. An opening communicating to the mounting cavity is created on the housing 211. The end cap 212 fits and covers the opening. The insulation layer is disposed between at least a part of the cell assembly 213 and the end cap 212.

As shown in FIG. 4, the housing 211 and the end cap 212 are discrete structures. The insulation layer is disposed between the housing 211 and the cell assembly 213; or, the insulation layer is disposed between the end cap 212 and the cell assembly 213; or, the insulation layer is disposed between the housing 211 and the cell assembly 213, and between the end cap 212 and the cell assembly 213.

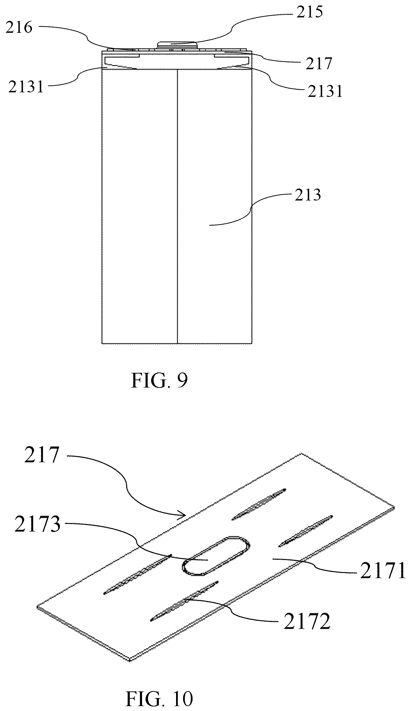

As shown in FIG. 4, FIG. 8, and FIG. 9, FIG. 8 is a schematic structural diagram of connection between a cell assembly 213 and a second insulation layer 217 according to an embodiment of this application, and FIG. 9 is a schematic structural diagram of connection between a cell assembly 213 and a second insulation layer 217 from another viewing angle according to an embodiment of this application. In an embodiment of this application, the second insulation layer 217 is disposed between a top face of the cell assembly 213 and the end cap 212. With the second insulation layer 217 disposed between the cell assembly 213 and the end cap 212, when the end cap 212 incurs an insulation failure and generates an electrical arcing or arc, the electrical arcing or arc will not break down the top face, corresponding to the second insulation layer 212, of the cell assembly 213, thereby reducing or avoiding short-circuiting in the cell assembly 213.

In an embodiment of this application, the housing 211 and the end cap 212 may be a one-piece structure instead. By disposing an insulation layer at a corresponding position on the outer surface of the cell assembly 213, the cell assembly 213 can also be protected from being broken down by the electrical arcing or arc.

Still as shown in FIG. 4, FIG. 8, and FIG. 9, in an embodiment of this application, the battery cell 21 further includes an electrode post 215. The electrode post 215 penetrates the end cap 212. The electrode post 215 is connected to the cell assembly 213 by a conductive strip 216. The second insulation layer 217 is disposed between at least a part of the cell assembly 213 and the conductive strip 216.

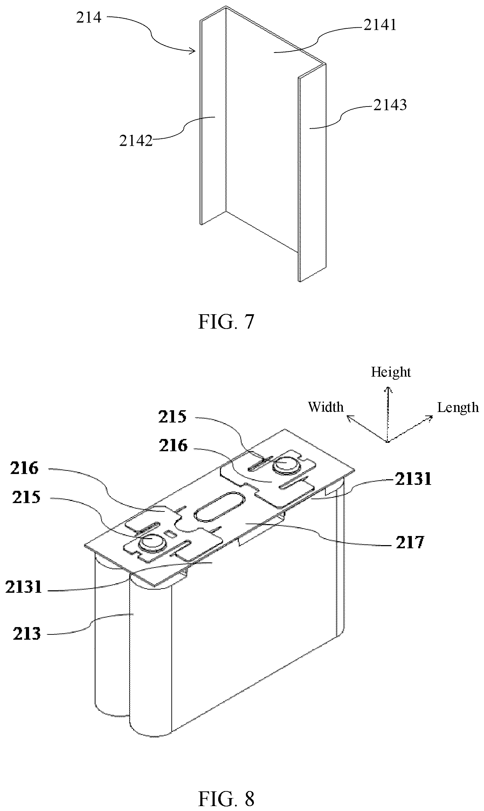

Specifically, the two ends of the electrode post 215 are disposed on the two sides of the end cap 212, respectively. To be specific, one end of the electrode post 215 extends out of the housing 211, and the other end of the electrode post 215 passes through the end cap 212 and then is connected to the cell assembly 213, thereby combining with the cell assembly 213 to form an electrical circuit by which electrical energy is supplied to the outside. The electrode post 215 is connected to the cell assembly 213 by the conductive strip 216. The conductive strip 216 may be a metal sheet of conductivity or another circuit board. Both the electrode post 215 and the conductive strip 216 are conductive pieces. Therefore, when an insulation failure of the battery cell 21 occurs, the electrode post 215 and/or the conductive strip 216 are prone to generate an electrical arcing or arc. In order to prevent the electrical arcing or arc generated by the electrode post 215 and/or the conductive strip 216 from breaking down the cell assembly 213, an insulation layer may be disposed between the cell assembly 213 and the conductive strip 216. As shown in FIG. 8 and FIG. 9, a second insulation layer 217 is disposed between the conductive strip 216 and the top face of the cell assembly 213.

With the second insulation layer 217 disposed between the cell assembly 213 and the conductive strip 216, when the electrode post 215 or the conductive strip 216 incurs an insulation failure and generates an electrical arcing or arc, the electrical arcing or arc will not break down the top face, corresponding to the second insulation layer 217, of the cell assembly 213, thereby reducing or avoiding short-circuiting in the cell assembly 213. In addition, an insulation layer may also be disposed between the cell assembly 213 and the housing 211, thereby protecting other lateral faces of the cell assembly 213 concurrently.

As shown in FIG. 8 and FIG. 9, in an embodiment of this application, a second insulation layer 217 is disposed between the conductive strip 216 and the cell assembly 213. The second insulation layer 217 laps the end of the tab 2131 along a direction perpendicular to the tab 2131 of the cell assembly 213.

Specifically, the tab 2131 is disposed protrusively on the top face of the cell assembly 213. The tab 2131 is configured to connect the electrode post 215 and the cell assembly 213. Two tabs 2131 are disposed at intervals on one lateral face of the cell assembly 213 in the length direction of the cell assembly, and two tabs 2131 are also disposed at intervals on another lateral face of the cell assembly 213 in the length direction. The tabs 2131 on one lateral face correspond to the tabs on the other lateral face one to one. The second insulation layer 217 laps an upper end of the tab 2131, so that the second insulation layer 217 is spaced apart from the main body of the cell assembly 213.

The cell assembly 213 contains a large amount of chemical substances, such as an electrolyte. Mixed gas and liquid and the like are generated in large quantities during charging and discharging, accompanied by continuous accumulation of pressure. Therefore, in order to avoid an explosion caused by an excessive pressure in the cell assembly 213, the second insulation layer 217 is spaced apart from the main body of the cell assembly 213, thereby facilitating the cell assembly 213 to exhaust gas, and preventing an explosion caused by the failure to exhaust the high-pressure gas in time.

As shown in FIG. 8 to FIG. 10, FIG. 10 is a schematic structural diagram of a second insulation layer 217 according to an embodiment of this application. In an embodiment of this application, a bend portion (not shown in the drawings) is disposed on the conductive strip 216. An insertion hole 2172 corresponding to the bend portion is created on the second insulation layer 217. The bend portion passes through the insertion hole 2172 and is connected to the tab 2131.

Specifically, the second insulation layer 217 corresponding to the top face of the cell assembly 213 includes a second body portion 2171. The second body portion 2171 is disposed between the tab 2131 and the conductive strip 216. In order to facilitate the bend portion to pass through the second insulation layer 217 and then be connected to the tab 2131, and facilitate supply of electrical energy to the outside through the electrode post 215, an insertion hole 2172 available for being passed through by the bend portion of the conductive strip 216 is disposed on the second body portion 2171. The cell assembly 213 includes four tabs 2131. Therefore, four bend portions need to be disposed for connection to the tabs 2131. Correspondingly, four insertion holes 2172 are created on the second body portion 2171. The four insertion holes 2172 correspond to the four bend portions one to one. The four bend portions are connected to the tabs 2131 respectively after passing through the four insertion holes 2172.

Still as shown in FIG. 8 to FIG. 10, in an embodiment of this application, a through-hole 2173 is created on the second insulation layer 217. The through-hole 2173 communicates to a pressure relief piece on the end cap 212.

Specifically, the pressure relief piece is an explosion-proof valve. The explosion-proof valve is disposed on the end cap 212, and can be burst open under the action of high-pressure gas when the gas pressure in the battery cell 21 rises, thereby expelling the gas in the battery cell 21 and releasing the pressure to prevent the battery cell 21 from exploding.

When the internal pressure of the battery cell 21 rises, the generated high-pressure gas can act on the pressure relief piece through the through-hole 2173, thereby bursting the pressure relief piece, expelling the high-pressure gas out of the battery cell 21, and ensuring the safety and reliability of the battery cell 21 in use.

As shown in FIG. 4, FIG. 5, and FIG. 8, in an embodiment of this application, the insulation layer is connected to the cell assembly 213, and/or the insulation layer is connected to the housing 211, and/or the insulation layer is connected to the conductive strip 216, and/or the insulation layer is fixed between the housing 211 and the cell assembly 213, and/or the insulation layer is fixed between the conductive strip 216 and the cell assembly 213.

Specifically, as shown in FIG. 4 and FIG. 5, one first insulation layer 214 is disposed on each of the two lateral faces of the cell assembly 213 in the length direction of the cell assembly. The first insulation layer 214 may be connected to the lateral face of the cell assembly 213 in the length direction, or, the first insulation layer 214 may be connected to the housing 211 corresponding to the lateral face of the cell assembly 214 in the length direction, or, when the cell assembly 213 and the first insulation layer 214 are mounted inside the housing 211, the first insulation layer 214 is clamped and fixed by the cell assembly 213 and the housing 211 together. As shown in FIG. 4 and FIG. 8, one second insulation layer 217 is disposed on the top face of the cell assembly 213 correspondingly. The second insulation layer 217 may be connected to the tab 2131 on the top face of the cell assembly 213, or, the second insulation layer 217 may be connected to the conductive strip 216, or, when the conductive strip 216 is connected to the tab 2131, the second insulation layer 217 is clamped and fixed by the conductive strip 216 and the tab 2131 together.

All the above arrangements can dispose the insulation layer on the outer side the cell assembly 213 correspondingly. In this way, the insulation layer can protect the cell assembly 213 and prevent the cell assembly 213 from being broken down by the electrical arcing or arc, thereby improving the safety and reliability of the battery cell 21 in use.

In an embodiment of this application, the melting point of the insulation layer is greater than 250 °C and less than 1000 °C.

Specifically, the melting point of the insulation layer is the temperature at which the insulation layer changes from solid to liquid. When the temperature of the insulation layer reaches 250 °C or above, the insulation layer melts and deforms, thereby losing the protection effect for the cell assembly 213. When the temperature of the insulation layer is less than or equal to 250 °C, the insulation layer does not melt or deform, thereby always protecting the cell assembly 213.

By setting the melting point of the insulation layer to be greater than 250 °C and less than 1000 °C, this application can prevent the insulation layer from melting under the action of the electrical arcing or arc, thereby effectively protecting the cell assembly 213.

In an embodiment of this application, the insulation layer includes at least one of a polyimide layer, a phenolic plastic layer, a ceramic layer, or a polytetrafluoroethylene layer.

All of the above material layers are insulative and somewhat heat-resistant, thereby meeting the requirements of insulativity and heat resistance of the insulation layer.

In an embodiment of this application, a thickness of the insulation layer is D, satisfying: 0.05 mm < D < 2 mm. A voltage of the battery cell 21 is V, satisfying: 200 V/mm < V/D < 40000 V/mm.

Specifically, the thickness of the insulation layer is the thickness of a single insulation layer. Based on the size of an existing battery cell 21, the thickness D of the insulation layer is typically greater than 0.05 mm and less than 2 mm, so that the insulation layer is prevented from being broken down by the electrical arcing, and can provide protection for the cell assembly 213. Further, the thickness of the insulation layer may be selected based on the voltage V of the battery cell 21, and generally satisfies: 200 V/mm < V/D < 40000 V/mm.

The thickness range of the insulation layer can effectively prevent the insulation layer from being broken down by the electrical arcing or arc generated at a corresponding voltage, thereby protecting the cell assembly 213.

In an embodiment of this application, a total mass of the insulation layers is 0.1% to 1% of a total mass of the battery cell 21. The total mass of the insulation layers means the total mass of all insulation layers in the battery cell 21.

The dimension and area corresponding to the mass of the insulation layer can prevent the electrical arcing from breaking down the insulation layer and the cell assembly 213, and the insulation layer is prevented from occupying an excessive space in the housing 211, thereby meeting the requirements of miniaturization and light weight of the battery cell 21.

In an embodiment of this application, the cell assembly 213 is a cuboidal structure. The insulation layer is disposed between at least one of two lateral faces of the cell assembly 213 in a length direction of the cell assembly and the housing.

Specifically, as shown in FIG. 5, in an embodiment of this application, the cell assembly 213 is a cuboidal structure. A first insulation layer 214 is disposed at each of two lateral faces of the cell assembly 213 in the length direction of the cell assembly.

In an embodiment of this application, the cell assembly 213 is a cuboidal structure. The insulation layer is disposed on a top face of the cell assembly 213.

As shown in FIG. 8, in an embodiment of this application, the cell assembly 213 is a cuboidal structure. A second insulation layer 217 is disposed at the top face of the cell assembly 213 correspondingly.

In an embodiment of this application, the cell assembly 213 is a cuboidal structure. The insulation layer is disposed between at least one of two lateral faces of the cell assembly 213 in a width direction of the cell assembly and the housing 211.

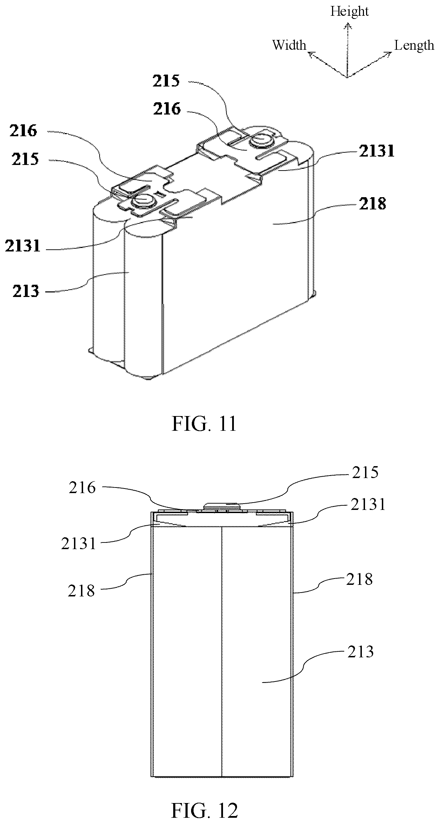

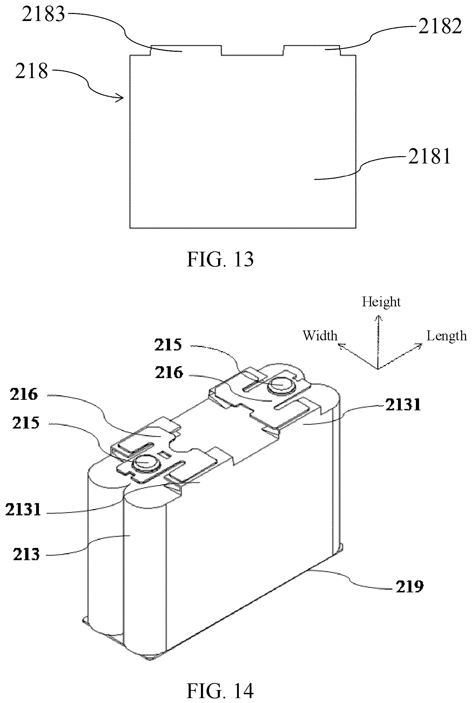

As shown in FIG. 11 to FIG. 14, FIG. 11 is a schematic structural diagram of connection between a cell assembly 213 and a third insulation layer 218 according to an embodiment of this application; FIG. 12 is a schematic structural diagram of connection between a cell assembly 213 and a third insulation layer 218 from another viewing angle according to an embodiment of this application; and FIG. 13 is a schematic structural diagram of a third insulation layer 218 according to an embodiment of this application. In an embodiment of this application, the third insulation layer 218 is disposed at each of two lateral faces of the cell assembly 213 correspondingly in the width direction of the cell assembly. Specifically, the third insulation layer 218 includes a third body portion 2181. A first protruding portion 2182 and a second protruding portion 2183 are disposed at intervals on the top of the third body portion 2181. The third body portion 2181 corresponds to the lateral face of the cell assembly 213 in the width direction of the cell assembly. The first protruding portion 2182 and the second protruding portion 2183 correspond to the tabs 2131 respectively, thereby comprehensively protecting the lateral faces of the cell assembly 213 in the width direction, preventing the electrical arcing or arc from breaking down the lateral faces of the cell assembly 213 in the width direction, or preventing the electrical arcing or arc from breaking down, through the tabs 2131, the lateral faces of the cell assembly 213 in the width direction.

In an embodiment of this application, the cell assembly 213 is a cuboidal structure. An insulation layer is disposed between a bottom face of the cell assembly 213 and the housing 211.

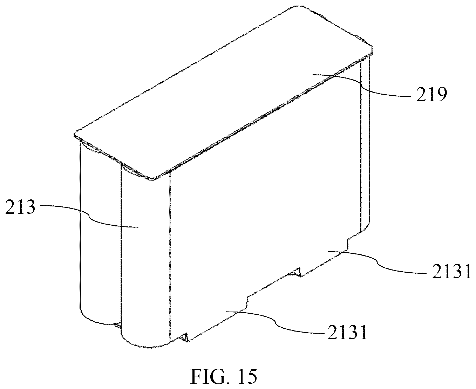

As shown in FIG. 14 and FIG. 15, FIG. 14 is a schematic structural diagram of connection between a cell assembly 213 and a fourth insulation layer 219 according to an embodiment of this application, and FIG. 15 is a schematic structural diagram of connection between a cell assembly 213 and a fourth insulation layer 219 from another viewing angle according to an embodiment of this application. In an embodiment of this application, a fourth insulation layer 219 is disposed at the bottom face of the cell assembly 213 correspondingly. The fourth insulation layer 219 protects the bottom face of the cell assembly 213 to prevent the electrical arcing or arc from breaking down the bottom face of the cell assembly 213.

The insulation layer in this application may be disposed on any surface of the cell assembly 213 correspondingly, or disposed on a plurality of surfaces or all surfaces of the cell assembly 213 concurrently, thereby effectively protecting the cell assembly 213 and preventing the cell assembly 213 from being broken down by the electrical arcing or arc.

In an embodiment of this application, the insulation layer fully covers a corresponding surface of the cell assembly 213.

Specifically, as shown in FIG. 5, the first insulation layers 214 are disposed directly opposite to the two lateral faces of the cell assembly 213 in the length direction respectively, and fully cover the two directly opposite lateral faces of the cell assembly 213 in the length direction, thereby fully and effectively preventing the two lateral faces of the cell assembly 213 in the length direction from being broken down by the electrical arcing or arc.

As shown in FIG. 8, the second insulation layer 217 is disposed directly opposite to the top face of the cell assembly 213, and fully covers the top face of the cell assembly 213, thereby fully and effectively preventing the top face of the cell assembly 213 from being broken down by the electrical arcing or arc.

As shown in FIG. 11, the third insulation layers 218 are disposed directly opposite to the two lateral faces of the cell assembly 213 in the width direction of the cell assembly, and fully cover the two directly opposite lateral faces of the cell assembly 213 in the width direction, thereby fully and effectively preventing the two lateral faces of the cell assembly 213 in the width direction from being broken down by the electrical arcing or arc.

As shown in FIG. 14, the fourth insulation layer 219 is disposed directly opposite to the bottom face of the cell assembly 213, and fully covers the bottom face of the cell assembly 213, thereby fully and effectively preventing the bottom face of the cell assembly 213 from being broken down by the electrical arcing or arc.

With the insulation layers fully covering the directly opposite surfaces, the surface on the corresponding side is fully and effectively prevented from being broken down by the electrical arcing or arc.

According to a second aspect, as shown in FIG. 2 and FIG. 3, this application provides a battery 10. The battery contains the battery cell 21 disclosed in the above embodiment.

According to a third aspect, as shown in FIG. 1 and FIG. 2, this application provides an electrical device. The electrical device contains the battery 10 disclosed in any one of the above embodiments. The battery 10 is configured to provide electrical energy for the electrical device.

The electrical device may be any device or system described above in which the battery is applied.

Because the battery and electrical device in this application are endowed with the same technical features as those of the battery cell described in the above embodiment, the battery and electrical device can achieve the same technical effects, the details of which are omitted here.

In an embodiment of this application, as shown in FIG. 4 and FIG. 15, the battery cell 21 includes a housing 211, an end cap 212, a cell assembly 213, and an insulation layer. A mounting cavity is provided inside the housing 211. The cell assembly 213 is disposed in the mounting cavity. An opening communicating to the mounting cavity is created on the housing 211. The end cap 212 fits and covers the opening. The battery cell 21 further includes an electrode post 215. The electrode post 215 penetrates the end cap 212. The electrode post 215 is connected to the cell assembly 213 by a conductive strip 216. The cell assembly 213 is a cuboidal structure. A first insulation layer 214 is disposed between each of the two lateral faces of the cell assembly 213 in the length direction of the cell assembly and the housing 211. A second insulation layer 217 is disposed between the top face of the cell assembly 213 and the conductive strip 216. A third insulation layer 218 is disposed between each of the two lateral faces of the cell assembly 213 in the width direction and the housing 211. A fourth insulation layer 219 is disposed between the bottom face of the cell assembly 213 and the housing 211. The first insulation layers 214 fully cover the two lateral faces of the cell assembly 213 in the length direction. The second insulation layer 217 fully covers the top face of the cell assembly 213. The third insulation layers 218 fully cover the two lateral faces of the cell assembly 213 in the width direction. The fourth insulation layer 219 fully covers the bottom face of the cell assembly 213. The second insulation layer 217 is disposed between the conductive strip 216 and the cell assembly 213. The second insulation layer 217 laps the end of the tab 2131 along a direction perpendicular to the tab 2131 of the cell assembly 213. A bend portion is disposed on the conductive strip 216. An insertion hole 2172 corresponding to the bend portion is created on the second insulation layer 217. The bend portion passes through the insertion hole 2172 and is connected to the tab 2131. A through-hole 2173 is further created on the second insulation layer 217. The through-hole 2173 communicates to a pressure relief piece on the end cap 212. The first insulation layer 214, the second insulation layer 217, and the third insulation layer 218 in this embodiment are connected to the cell assembly 213 separately. The fourth insulation layer 219 is connected to the conductive strip 216. The melting points of the first insulation layer 214, the second insulation layer 217, the third insulation layer 218, and the fourth insulation layer 219 are greater than 250 °C and less than 1000 °C. The first insulation layer 214, the second insulation layer 217, the third insulation layer 218, and the fourth insulation layer 219 each include at least one of a polyimide layer, a phenolic plastic layer, a ceramic layer, or a polytetrafluoroethylene layer. The thicknesses of the first insulation layer 214, the second insulation layer 217, the third insulation layer 218, and the fourth insulation layer 219 are denoted as D, satisfying: 0.05 mm < D < 2 mm. The voltage of the battery cell 21 is V, satisfying: 200 V/mm < V/D < 40000 V/mm. The total mass of the first insulation layer 214, the second insulation layer 217, the third insulation layer 218, and the fourth insulation layer 219 is 0.1% to 1% of the total mass of the battery cell 21.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict occurs, various technical features mentioned in different embodiments may be combined in any manner. This application is not limited to the specific embodiments disclosed herein, but includes all technical solutions falling within the scope of the claims.

## Claims

1. A battery cell, **characterized in that** the battery cell comprises:
a housing, wherein a mounting cavity is provided inside the housing;
a cell assembly, wherein the cell assembly is disposed in the mounting cavity; and
an insulation layer, disposed between at least a part of the cell assembly and the housing.

2. The battery cell according to claim 1, **characterized in that** the battery cell further comprises an end cap, an opening communicating to the mounting cavity is created on the housing, the end cap fits and covers the opening, and the insulation layer is disposed between at least a part of the cell assembly and the end cap.

3. The battery cell according to claim 2, **characterized in that** the battery cell further comprises an electrode post, the electrode post penetrates the end cap, the electrode post is connected to the cell assembly by a conductive strip, and the insulation layer is disposed between at least a part of the cell assembly and the conductive strip.

4. The battery cell according to claim 3, **characterized in that** the insulation layer laps an end of a tab along a direction perpendicular to the tab of the cell assembly.

5. The battery cell according to claim 4, **characterized in that** a bend portion is disposed on the conductive strip, an insertion hole is created on the insulation layer, and the bend portion passes through the insertion hole and is connected to the tab.

6. The battery cell according to claim 3, **characterized in that** a through-hole is created on the insulation layer, and the through-hole communicates to a pressure relief piece on the end cap.

7. The battery cell according to any one of claims 1 to 6, **characterized in that** the insulation layer is connected to the cell assembly.

8. The battery cell according to any one of claims 1 to 6, **characterized in that** the insulation layer is connected to the housing.

9. The battery cell according to any one of claims 1 to 6, **characterized in that** the insulation layer is fixed between the housing and the cell assembly.

10. The battery cell according to any one of claims 3 to 6, **characterized in that** the insulation layer is connected to the conductive strip.

11. The battery cell according to any one of claims 3 to 6, **characterized in that** the insulation layer is fixed between the conductive strip and the cell assembly.

12. The battery cell according to any one of claims 1 to 6, **characterized in that** a melting point of the insulation layer is greater than 250 °C and less than 1000 °C.

13. The battery cell according to any one of claims 1 to 6, **characterized in that** the insulation layer comprises at least one of a polyimide layer, a phenolic plastic layer, a ceramic layer, or a polytetrafluoroethylene layer.

14. The battery cell according to any one of claims 1 to 6, **characterized in that** a thickness of the insulation layer is D, satisfying: 0.05 mm < D < 2 mm, and a voltage of the battery cell is V, satisfying: 200 V/mm < V/D < 40000 V/mm.

15. The battery cell according to any one of claims 1 to 6, **characterized in that** a total mass of the insulation layers is 0.1% to 1% of a total mass of the battery cell.

16. The battery cell according to any one of claims 1 to 6, **characterized in that** the cell assembly is a cuboidal structure, and the insulation layer is disposed between at least one of two lateral faces of the cell assembly in a length direction of the cell assembly and the housing.

17. The battery cell according to any one of claims 1 to 6, **characterized in that** the cell assembly is a cuboidal structure, and the insulation layer is disposed between at least one of two lateral faces of the cell assembly in a width direction of the cell assembly and the housing.

18. The battery cell according to any one of claims 1 to 6, **characterized in that** the cell assembly is a cuboidal structure, and the insulation layer is disposed between a bottom face of the cell assembly and the housing.

19. The battery cell according to any one of claims 1 to 6, **characterized in that** the cell assembly is a cuboidal structure, and the insulation layer is disposed on a top face of the cell assembly.

20. The battery cell according to any one of claims 1 to 6, **characterized in that** the insulation layer fully covers a corresponding surface of the cell assembly.

21. A battery, **characterized in that** the battery contains the battery cell according to any one of claims 1 to 20.

22. An electrical device, **characterized in that** the electrical device contains the battery according to claim 21.
